# EUROPEAN PATENT SPECIFICATION

(11) **EP 3 632 979 B1**
(45) Date of publication and mention of the grant of the patent: **27.10.2021**
(21) Application number: 19199053.0
(22) Date of filing: 23.09.2019
(51) Int. Cl.: C08L 23/12

(54) **HIGHLY RIGID COMPOSITE RESIN COMPOSITION WITH EXCELLENT TACTILITY AND HEAT RESISTANCE AND ARTICLE MOLDED THEREFROM**
HOCHSTEIFE VERBUNDHARZZUSAMMENSETZUNG MIT HERVORRAGENDER TAKTILITÄT UND WÄRMEBESTÄNDIGKEIT UND DARAUS GEFORMTER ARTIKEL
COMPOSITION DE RÉSINE COMPOSITE EXTRÊMEMENT RIGIDE PRÉSENTANT D'EXCELLENTES SENSATIONS AU TOUCHER ET RÉSISTANCE À LA CHALEUR ET ARTICLE MOULÉ À PARTIR DE CELLE-CI

(30) Priority: 05.10.2018 KR 20180119067
(43) Date of publication of application: 08.04.2020
(73) Proprietor: Hanwha Total Petrochemical Co., Ltd., Seosan-si, Chungcheongnam-do 31900 (KR)
(72) Inventor: KIM, Taeyoung, 31900 Chungcheongnam-do (KR); LEE, Yoonhwan, 31900 Chungcheongnam-do (KR); JEON, Il-bae, 31900 Chungcheongnam-do (KR); LEE, Wooyeol, 31900 Chungcheongnam-do (KR); LEE, Hyoungwon, 31900 Chungcheongnam-do (KR)
(74) Representative: dompatent von Kreisler Selting Werner - Partnerschaft von Patent- und Rechtsanwälten mbB

(56) References cited:
- US-A1- 2014 163 154
- ttglink: "High Melt Strength Polypropylene", linkedin , 16 August 2016 (2016-08-16), XP002795717, Retrieved from the Internet: URL:https://de.slideshare.net/ttglink/link edinhmspp-65060714 [retrieved on 2019-11-18]
- Johns Manville: "ThermoFlow® 738", , August 2019 (2019-08), XP002795718, Retrieved from the Internet: URL:https://www.jm.com/content/dam/jm/glob al/en/engineered-products/EP-documents/Pro duct_Data_Sheets/Fibers/Chopped_Strands/Am ericas/ThermoFlow_738.pdf [retrieved on 2019-11-18]
- Lyondellbasell: "Catalloy TPO Resins", , 2013, XP002795719, Retrieved from the Internet: URL:https://www.lyondellbasell.com/globala ssets/documents/polymers-technical-literat ure/catalloy-tpo-resins-brochure-eu1.pdf [retrieved on 2019-11-18]
- Lyondellbasell: "Technical Data Sheet Pro-fax 6301", , 2018, XP002795720, Retrieved from the Internet: URL:https://www.lyondellbasell.com/en/poly mers/p/Pro-fax-6301/856c84f1-0226-4867-877 3-382e8d5e348e [retrieved on 2019-11-18]

## Description

### Technical Field

The present invention relates to a highly rigid composite resin composition with excellent tactility and heat resistance. Specifically, the present invention relates to a composite resin composition having excellent tactility and heat resistance as well as high rigidity as it comprises a polyamide resin as a component thereof.

### Background Art of the Invention

A polypropylene resin, which is one of the general-purpose resins, is not only economical but also excellent in mechanical properties, moldability, and chemical resistance. Thus, it is widely used as a material for automobile interior and exterior parts, electronic and household appliances parts, construction and industrial supplies, and the like.

Attempts have been made to provide a composite resin composition comprising a polypropylene resin and a thermoplastic elastomer resin in order to improve the tactility of an article molded from such a polypropylene resin composition. However, an article molded from such a composite resin composition is disadvantageous in that it is poor in rigidity or vulnerable to scratches, as well as it is poor in heat resistance, although its tactility is improved.

Meanwhile, attempts have been made to provide a composite resin composition by adding long fibers and an inorganic filler to a polypropylene resin in order to secure high rigidity of an article molded from the polypropylene resin. However, an article molded from such a composite resin composition is disadvantageous in that its tactility is not excellent.

Alternatively, good tactility may be imparted to a high-rigidity material by injection molding a polypropylene resin along with a long fiber and an inorganic filler, followed by wrapping it with a fabric or a skin layer that provides soft tactility. However, there are disadvantages in that the cost-effectiveness is lowered due to the additional steps and that the affinity between the molded article and the fabric or the skin layer may not be sufficient depending on the materials thereof.

Accordingly, there has been a demand for a composite resin composition, which is excellent in tactility and rigidity as well as excellent in heat resistance and scratch resistance, to be prepared through one injection molding process without additional steps.

### Disclosure of the Invention

### Technical Problem to Solve

An object of the present invention is to provide a composite resin composition that is excellent in tactility and heat resistance as well as excellent in rigidity and scratch resistance.

### Solution to the Problem

According to an embodiment of the present invention for achieving the above object, there is provided a composite resin composition, which comprises, based on 100 parts by weight of components (a) to (f), (a) 10 to 40 parts by weight of a propylene homopolymer resin; (b) 25 to 60 parts by weight of a long glass fiber; (c) 0.2 to 15 parts by weight of a modified polyolefin resin, (d) 1 to 15 parts by weight of a polypropylene-based resin selected from the group consisting of an ethylene-propylene block copolymer resin and an ethylene-propylene random copolymer resin; (e) 30 to 50 parts by weight of an ethylene-α-olefin rubber copolymer resin; (f) 0.1 to 10 parts by weight of a polyamide resin; and (g) 500 to 3,000 ppm of a nucleating agent, wherein the propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg.

The long glass fiber (b) may have an average diameter of 10 to 30 µm and an average length of 5 to 20 mm.

The modified polyolefin resin (c) may be a polypropylene resin grafted with maleic anhydride.

The polypropylene-based resin (d) may have a melt index of 5 to 40 g/10 minutes as measured at 230°C under a load of 2.16 kg and an ethylene content of 20% by weight or more.

The ethylene-α-olefin rubber copolymer resin (e) may have a melt index of 0.5 to 40 g/10 minutes as measured at 190°C under a load of 2.16 kg, and it may be a copolymer of ethylene and an α-olefin having 4 to 8 carbon atoms. Specifically, the ethylene-α-olefin rubber copolymer resin (e) may be at least one selected from the group consisting of an ethylene-1-butene rubber, an ethylene-butylene rubber, an ethylene-1-pentene rubber, an ethylene-1-hexene rubber, ethylene-1-heptene rubber, and ethylene-1-octene rubber.

The polyamide resin (f) may be at least one of an aliphatic polyamide resin selected from the group consisting of nylon 6, nylon 46, nylon 66, nylon 610, nylon 11, nylon 12, and nylon 6/66; and an aromatic polyamide resin selected from the group consisting of a copolymerized polyamide of palladium aminomethylbenzoic acid and ε-caprolactam (or nylon AHBA/6) and a copolymerized polyamide of terephthalic acid and trimethylhexamethylenediamine (or nylon THDT).

The nucleating agent (g) may be at least one of a sorbitol-based nucleating agent selected from the group consisting of benzylidene sorbitol, methylbenzylidene sorbitol, ethylbenzylidene sorbitol, and 3,4-dimethylbenzylidene sorbitol; an aluminum-based nucleating agent of aluminum hydroxy-di-t-butylbenzoate; and a sodium-based nucleating agent of sodium 2,2'-methylenebis(4,6-di-t-butylphenyl)phosphate.

The composite resin composition according to an embodiment of the present invention may further comprise at least one additive (h) selected from the group consisting of an antioxidant, a neutralizer, a reinforcement, a filler, a weathering stabilizer, an antistatic agent, a lubricant, a slip agent, a pigment, and a dye.

Specifically, the additive (h) may be at least one antioxidant selected from the group consisting of tetrakis(methylene(3,5-di-t-butyl-4-hydroxy)hydrosilylnate), 1,3,5-trimethyl-tris(3,5-di-t-butyl-4-hydroxybenzene), and tris(2,4-di-t-butylphenyl)phosphite.

According to another embodiment of the present invention, there is provided a process for preparing a composite resin composition, which comprises (A) preparing a first masterbatch by mixing, based on 100 parts by weight of components (a) to (f), (a) 10 to 40 parts by weight of a propylene homopolymer resin, (b) 25 to 60 parts by weight of a long glass fiber, and (c) 0.1 to 10 parts by weight of a modified polyolefin resin; (B) preparing a second masterbatch by mixing, based on 100 parts by weight of components (a) to (f), (d) 1 to 15 parts by weight of a polypropylene-based resin selected from the group consisting of an ethylene-propylene block copolymer resin and an ethylene-propylene random copolymer resin, (e) 30 to 50 parts by weight of an ethylene-α-olefin rubber copolymer resin, (f) 0.1 to 10 parts by weight of a polyamide resin, (c) 0.1 to 5 parts by weight of a modified polyolefin resin, and (g) 500 to 3,000 ppm of a nucleating agent; and (C) mixing the first masterbatch and the second masterbatch, wherein the propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg.

According to still another embodiment of the present invention, there is provided a molded article of a composite resin prepared by molding the above composite resin composition or a composite resin composition prepared by the above preparation process.

The molded article of a composite resin according to the embodiment of the present invention may be selected from the group consisting of automobile interior and exterior parts, electronic and household appliances parts, and construction and industrial supplies.

### Advantageous Effects of the Invention

The composite resin composition according to the embodiment of the present invention is excellent in tactility and heat resistance as well as excellent in rigidity and scratch resistance as it comprises a polyamide resin as a component thereof. Thus, a molded article prepared therefrom can be advantageously used as automobile interior and exterior parts, electronic and household appliances parts, construction and industrial supplies, and the like.

### Detailed Description for Carrying out the Invention

Hereinafter, the present invention will be described in more detail.

The composite resin composition according to an embodiment of the present invention comprises, based on 100 parts by weight of components (a) to (f), (a) 10 to 40 parts by weight of a propylene homopolymer resin; (b) 25 to 60 parts by weight of a long glass fiber; (c) 0.2 to 15 parts by weight of a modified polyolefin resin, (d) 1 to 15 parts by weight of a polypropylene-based resin selected from the group consisting of an ethylene-propylene block copolymer resin and an ethylene-propylene random copolymer resin; (e) 30 to 50 parts by weight of an ethylene-α-olefin rubber copolymer resin; (f) 0.1 to 10 parts by weight of a polyamide resin; and (g) 500 to 3,000 ppm of a nucleating agent, wherein the propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg.

### (a) Propylene homopolymer resin

The propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg. Preferably, the melt index of the first propylene homopolymer resin may be 25 to 35 g/10 minutes or 28 to 32 g/10 minutes. Preferably, the melt index of the second propylene homopolymer resin may be 700 to 1,200 g/10 minutes or 900 to 1,100 g/10 minutes.

Here, the mixing ratio of the first propylene homopolymer resin and the second propylene homopolymer resin may be 3:7 to 7:3 by weight. Preferably, the mixing ratio may be about 6:4 by weight.

If the propylene homopolymer resin (a) is a mixture obtained by mixing two kinds of propylene homopolymer resins each satisfying the above melt index range at a weight ratio within the above range, the propylene homopolymer resin infiltrates well into the bundles of a long glass fiber, which makes excellent the dispersibility at the time of kneading.

The propylene homopolymer resin (a) may be any commercially available product or may be prepared by mixing two kinds of propylene homopolymer resins each satisfying the above melt index range.

The propylene homopolymer resin (a) may be employed in an amount of 10 to 40 parts by weight, 15 to 35 parts by weight, or 20 to 30 parts by weight, based on 100 parts by weight of components (a) to (f) constituting the composite resin composition. If the content of the propylene homopolymer resin (a) is less than 10 parts by weight, the dispersibility of the long glass fiber (b) at the time of kneading is not sufficient, which is not desirable. On the other hand, if the content exceeds 40 parts by weight, such physical properties as rigidity and scratch resistance of an article prepared by molding the composite resin composition are not sufficient, which is not desirable.

### (b) Long glass fiber

The long glass fiber (b) may have an average diameter of 10 to 30 µm and an average length of 5 to 20 mm. If the average diameter of the long glass fiber (b) is within the above range, it is possible to prevent the breakage of the long glass fiber at the time of impregnating the propylene homopolymer resin (a). In addition, if the average length of the long glass fiber (b) is within the above range, the article prepared by molding the composite resin composition has excellent physical properties in terms of rigidity and scratch resistance.

The long glass fiber (b) may be in the form of fiberglass roving wound around a bobbin, but it is not limited thereto. Preferably, the glass fiber roving may be impregnated with the propylene homopolymer resin (a) and the modified polyolefin resin (c), which is then made into a pellet of 5 to 20 mm in size.

The long glass fiber (b) may be employed in an amount of 25 to 60 parts by weight, 30 to 50 parts by weight, or 35 to 40 parts by weight, based on 100 parts by weight of components (a) to (f) constituting the composite resin composition. If the content of the long glass fiber (b) is less than 25 parts by weight, the rigidity and the impact resistance of an article prepared by molding the composite resin composition may not be sufficient. On the other hand, if the content of the long glass fiber (b) exceeds 60 parts by weight, the dispersibility at the time of impregnating the propylene homopolymer resin (a) may be deteriorated.

### (c) Modified polyolefin resin

The modified polyolefin resin (c) is preferably a polypropylene resin grafted with maleic anhydride. The polypropylene grafted with maleic anhydride is prepared by a solution method, wherein the grafting ratio of maleic anhydride is as high as 0.5 to 2.0% by weight, preferably 0.8 to 1.5% by weight, which can produce the effect of improving the adhesion to a polar substrate. Specifically, the polypropylene grafted with maleic anhydride employed in the composite resin composition of the present invention may be prepared by grafting maleic anhydride onto a polypropylene having a melt index of 0.5 to 3 g/10 minutes.

The modified polyolefin resin (c) may be employed in an amount of 0.2 to 15 parts by weight, 0.2 to 12 parts by weight, or 0.2 to 10 parts by weight, based on 100 parts by weight of components (a) to (f) constituting the composite resin composition. As the content of the modified polyolefin resin (c) increases, the compatibility of the glass fiber and the polyamide resin with other resin components is improved. But if the content exceeds 15 parts by weight, the mechanical properties of an article prepared by molding the composite resin composition may be deteriorated.

### (d) Polypropylene-based resin

The polypropylene-based resin (d) is selected from the group consisting of an ethylene-propylene block copolymer resin and an ethylene-propylene random copolymer resin.

The polypropylene-based resin (d) may have a melt index of 5 to 40 g/10 minutes, preferably 5 to 35 g/10 minutes, as measured at 230°C under a load of 2.16 kg. If the melt index of the polypropylene-based resin (d) is within the above range, the processability of the composite resin composition and the mechanical properties of an article prepared by molding the same are excellent.

In addition, the polypropylene-based resin (d) may have an ethylene content of 20% by weight or more, preferably 20 to 40% by weight. If the ethylene content is less than 20% by weight, the tactility of the molded article may be deteriorated. If the ethylene content exceeds 40% by weight, the mechanical properties of the molded article may be deteriorated, and the heat resistance thereof may be insufficient.

The polypropylene-based resin (d) is employed in an amount of 1 to 15 parts by weight, 1 to 12 parts by weight, or 2 to 10 parts by weight, based on 100 parts by weight of components (a) to (f) constituting the composite resin composition. If the content of the polypropylene-based resin (d) is less than 1 part by weight, the mechanical properties of the molded article may be deteriorated. If it exceeds 15 parts by weight, the tactility of the molded article may be deteriorated.

### (e) Ethylene-α-olefin rubber copolymer resin

The ethylene-α-olefin rubber copolymer resin (e) may have a melt index of 0.5 to 10 g/10 minutes, preferably 1 to 10 g/10 minutes, as measured at 190°C under a load of 2.16 kg. If the melt index of the ethylene-α-olefin rubber copolymer resin (e) is less than 0.5 g/10 minutes, the processability of the composite resin composition may be deteriorated. On the other hand, if the melt index exceeds 10 g/10 minutes, the mechanical properties of a molded article may be deteriorated.

The ethylene-α-olefin rubber copolymer resin (e) may be a copolymer of ethylene and an having 4 to 8 carbon atoms. Specifically, the ethylene-α-olefin rubber copolymer resin (e) may be at least one selected from the group consisting of an ethylene-1-butene rubber, an ethylene-butylene rubber, an ethylene-1-pentene rubber, an ethylene-1-hexene rubber, ethylene-1-heptene rubber, and ethylene-1-octene rubber. Preferably, the ethylene-α-olefin rubber copolymer resin (e) may be ethylene-1-octene rubber.

The ethylene-α-olefin rubber copolymer resin (e) is employed in an amount of 30 to 50 parts by weight, 35 to 45 parts by weight, or 40 to 45 parts by weight, based on 100 parts by weight of components (a) to (f) constituting the composite resin composition. As the content of the ethylene-α-olefin rubber copolymer resin (e) increases, the tactility of an article prepared by molding the composite resin composition is improved. But if the content exceeds 50 parts by weight, the rigidity of the molded article may not be sufficient.

### (f) Polyamide resin

The polyamide resin (f) is a polymer containing an amide group as a repeat unit in the polymer chain. It may be at least one selected from an aliphatic polyamide and an aromatic polyamide, and either a crystalline polyamide or an amorphous polyamide may be used.

Specifically, the aliphatic polyamide is a polyamide produced by the bonding between at least one saturated aliphatic dicarboxylic acid and at least one aliphatic diamine, or the ring-opening polymerization of lactam. Examples thereof include nylon 6, nylon 46, nylon 66, nylon 610, nylon 11, nylon 12, and nylon 6/66, but it is not limited thereto.

The aromatic polyamide is a polyamide resin containing an aromatic component. The polyamide containing an aromatic component is a resin comprising at least one aromatic amino acid or aromatic diamine and/or at least one aromatic dicarboxylic acid. Examples thereof include a copolymerized polyamide of palladium aminomethylbenzoic acid and ε-caprolactam (or nylon AHBA/6) and a copolymerized polyamide of terephthalic acid and trimethylhexamethylenediamine (or nylon THDT), but it is not limited thereto.

The polyamide resin (f) may be employed in an amount of 0.1 to 10 parts by weight, 0.1 to 8 parts by weight, or 0.2 to 7 parts by weight, based on 100 parts by weight of components (a) to (f) constituting the composite resin composition. As the content of the polyamide resin (f) increases, the heat resistance of an article prepared by molding the composite resin composition increases. But if the content exceeds 10 parts by weight, the dispersibility thereof in the composite resin composition may be deteriorated, which is not desirable.

### (g) Nucleating agent

The nucleating agent (g) serves to increase the rigidity of an article prepared by molding of the composite resin composition. It may be at least one of a sorbitol-based nucleating agent selected from the group consisting of benzylidene sorbitol, methylbenzylidene sorbitol, ethylbenzylidene sorbitol, and 3,4-dimethylbenzylidene sorbitol; an aluminum-based nucleating agent such as aluminum hydroxy-di-t-butylbenzoate; and a sodium-based nucleating agent such as sodium 2,2'-methylenebis(4,6-di-t-butylphenyl)phosphate. But it is not limited thereto.

The nucleating agent (g) may be added in an amount of 500 to 3,000 ppm, 750 to 2,500 ppm, or 1,000 to 2,000 ppm, per 100 parts by weight of components (a) to (f) constituting the composite resin composition. If the content of the nucleating agent (g) is less than 500 ppm, the rigidity of a molded article may be insufficient, or the appearance of the molded article may be poor. On the other hand, if the content of the nucleating agent (g) exceeds 3,000 ppm, the nucleating agent (g) may elute from the composite resin composition, or the cost-effectiveness of the composite resin composition may be lowered.

### (h) Additive

The composite resin composition according to an embodiment of the present invention may further comprise 0.01 to 1 part by weight of an additive (h), excluding the nucleating agent, per 100 parts by weight of components (a) to (f) constituting the composite resin composition.

Examples of the additive include an antioxidant, a neutralizer, a reinforcement, a filler, a weathering stabilizer, an antistatic agent, a lubricant, a slip agent, a pigment, and a dye, but it is not limited thereto.

Preferably, the composite resin composition according to an embodiment of the present invention may comprise at least one antioxidant selected from a phenol-based heat resistance such as tetrakis(methylene(3,5-di-t-butyl-4-hydroxy)hydrosilylnate) and 1,3,5-trimethyl-tris(3,5-di-t-butyl-4-hydroxybenzene), and a phosphite-based heat resistance such as tris(2,4-di-t-butylphenyl)phosphite.

The antioxidant may be added in an amount of 0.01 to 0.2 parts by weight, preferably 0.05 to 0.1 parts by weight, per 100 parts by weight of components (a) to (f) constituting the composite resin composition. If the content of the antioxidant is less than 0.01 part by weight, it is difficult to secure the antioxidant effect of the resin. If the amount exceeds 0.2 part by weight, the cost-effectiveness of the resin composition may be lowered while the increase in the antioxidant effect is insignificant.

The process for preparing a composite resin composition according to another embodiment of the present invention comprises (A) preparing a first masterbatch by mixing, based on 100 parts by weight of components (a) to (f), (a) 10 to 40 parts by weight of a propylene homopolymer resin, (b) 25 to 60 parts by weight of a long glass fiber, and (c) 0.1 to 10 parts by weight of a modified polyolefin resin; (B) preparing a second masterbatch by mixing, based on 100 parts by weight of components (a) to (f), (d) 1 to 15 parts by weight of a polypropylene-based resin selected from the group consisting of an ethylene-propylene block copolymer resin and an ethylene-propylene random copolymer resin, (e) 30 to 50 parts by weight of an ethylene-α-olefin rubber copolymer resin, (f) 0.1 to 10 parts by weight of a polyamide resin, (c) 0.1 to 5 parts by weight of a modified polyolefin resin, and (g) 500 to 3,000 ppm of a nucleating agent; and (C) mixing the first masterbatch and the second masterbatch, wherein the propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg.

### (A) Preparation of a first masterbatch

A first masterbatch is prepared by mixing, based on 100 parts by weight of components (a) to (f), (a) 10 to 40 parts by weight of a propylene homopolymer resin; (b) 25 to 60 parts by weight of a long glass fiber; and (c) 0.1 to 10 parts by weight of a modified polyolefin resin. In such event, the propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg.

Specifically, a glass fiber roving is fed to a single-screw or twin-screw extruder while the propylene homopolymer resin and a part of the modified polyolefin resin are fed to be melted and impregnated into the glass fiber bundles. Subsequently, the glass fiber impregnated with the resins is cut into pellets of 5 to 20 mm in size in a pelletizer.

### (B) Preparation of a second masterbatch

A second masterbatch is prepared by mixing, based on 100 parts by weight of components (a) to (f), (d) 1 to 15 parts by weight of a polypropylene-based resin selected from the group consisting of an ethylene-propylene block copolymer resin and an ethylene-propylene random copolymer resin; (e) 30 to 50 parts by weight of an ethylene-α-olefin rubber copolymer resin; (f) 0.1 to 10 parts by weight of a polyamide resin; (c) 0.1 to 5 parts by weight of a modified polyolefin resin; and (g) 500 to 3,000 ppm of a nucleating agent.

Specifically, a second masterbatch is prepared by mixing the polypropylene resin, the ethylene-α-olefin rubber copolymer resin, the polyamide resin, the remaining part of the modified polyolefin resin, and the nucleating agent, which are appropriately fed to a single-screw or twin-screw extruder to be melted and kneaded at 160 to 280°C.

### (C) Preparation of a composite resin composition

The first masterbatch and the second masterbatch obtained above are then mixed to obtain a composite resin composition.

In such event, the mixing of the first masterbatch and the second masterbatch is preferably carried out by dry blending. Specifically, the first masterbatch and the second masterbatch may be put into a kneader such as a Banbury mixer and then sufficiently blended to prepare a composite resin composition according to an embodiment of the present invention.

According to still another embodiment of the present invention, there is provided a molded article of a composite resin prepared by molding the above composite resin composition or a composite resin composition prepared by the above preparation process.

There is no particular limitation to the method for producing the molded article from the composite resin composition according to the embodiment of the present invention, and any method known in the technical field of the present invention can be used. For example, the composite resin composition according to the embodiment of the present invention may be molded by a conventional method such as injection molding, extrusion molding, casting molding, or the like to prepare a molded article of a composite resin.

The molded article of a composite resin according to the embodiment of the present invention is excellent in tactility and heat resistance as well as excellent in rigidity and scratch resistance. Thus, a molded article prepared therefrom can be advantageously used as automobile interior and exterior parts, electronic and household appliances parts, construction and industrial supplies, and the like.

### Example

Hereinafter, the present invention is explained in detail by the following examples. However, the following examples are intended to further illustrate the present invention. The scope of the present invention is not limited thereto only.

In the example and the comparative examples, the following resins and compounds were used in the contents (unit: parts by weight; for nucleating agent unit: ppm) shown in Table 1.
- Resin a: a mixture of propylene homopolymers having a melt index of 30 and 1,000, respectively, as measured at 230°C under a load of 2.16 kg, mixed at a weight ratio of 6:4
- Glass fiber b1: a long glass fiber having an average diameter of 15 µm and an average length of 12 mm
- Glass fiber b2: a short glass fiber having an average diameter of 15 µm and an average length of 1 mm
- Resin c: a polypropylene resin grafted with 1% by weight of maleic anhydride
- Resin d: an ethylene-propylene block copolymer resin having a melt index of 10 g/10 minutes as measured at 230°C under a load of 2.16 kg and an ethylene content of 25% by weight
- Resin e: an ethylene-l-octene rubber having a melt index of 5 g/10 minutes as measured at 190°C under a load of 2.16 kg
- Resin f: a nylon 6 having a melt index of 15 g/10 minutes as measured at 230°C under a load of 2.16 kg
- Nucleating agent g: disodium (1S,2S,3R,4R)-bicyclo[2.2.1]heptane-2,3-dicarboxylate

**[Table 1]**

| | | Example | Comparative Example | | | | |
|---|---|---|---|---|---|---|---|
| | | 1 | 1 | 2 | 3 | 4 | 5 |
| Propylene homopolymer (a) | | 22 | 10 | 13 | 23 | 40 | 22 |
| Long glass fiber (b1) | | 25 | 0 | 15 | 30 | 0 | 25 |
| Short glass fiber (b2) | | 0 | 30 | 0 | 0 | 28 | 0 |
| Modified polyolcfin resin (c) | Step (A) | 2 | 2 | 1.5 | 2 | 2 | 2 |
| | Step (B) | 2 | 2 | 2.5 | 2 | 2 | 4 |
| Polypropylene-based resin (d) | | 3 | 10 | 12 | 10 | 20 | 6 |
| Ethylene-α-olefin rubber copolymer resin (e) | | 41 | 38 | 46 | 33 | 0 | 32 |
| Polyamide resin (f) | | 5 | 8 | 10 | 0 | 8 | 9 |
| Nucleating agent (g) | | 1,500 | 2,000 | 2,500 | 1,000 | 2,500 | 0 |

### Test Example

The resin (a) and a part of the resin (c) were fed while the glass fiber (b1 or b2) was supplied in the amounts (unit: parts by weight) as shown in the above Table 1 and melted and impregnated at a temperature of 200 to 230°C, which was then pelletized to prepare a first masterbatch (step (A)). In addition, the remaining part of the resin (c), the resins (d) to (f), and the nucleating agent (g) in the amounts (unit: parts by weight, the nucleating agent in ppm) as shown in Table 1 were melt-extruded in a twin-screw extruder at 210 to 240°C to prepare a second masterbatch (step (B)). Subsequently, the first masterbatch and the second masterbatch were dry blended in a kneader to obtain respective composite resin compositions (step (C)).

The composite resin compositions were each injection molded at a TOYO-180T (TOYO, mold clamping force of 180 tons) under the conditions of an injection temperature of 0/180/230/230/230°C from the feeding hopper to the nozzle, a mold temperature of 60°C, and an injection pressure of 60 to 100 bar to prepare a specimen of the ISO specification. The density, tensile strength, elongation, flexural modulus, impact strength, heat deflection temperature, and Shore hardness of the prepared specimens were each evaluated by the following methods. For evaluating the tactility and scratch resistance, the composite resin compositions were each injection molded into a grained plate.

### (1) Density

Density was measured at room temperature according to the ISO 1183 method.

### (2) Tensile strength and elongation

Tensile strength and elongation were measured at room temperature according to the ISO 527 method.

### (3) Flexural strength and flexural modulus

Flexural strength and flexural modulus were measured at room temperature according to the ISO 178 method.

### (4) Charpy impact strength

Charpy impact strength was measured at room temperature (23°C) and at a low temperature (-30°C) according to the ISO 179 method.

### (5) Shore D hardness

Shore D hardness was measured at room temperature according to the ISO 868 method.

### (6) Heat deflection temperature

Heat deflection temperature was measured according to the ISO 75-B method.

### (7) Scratch resistance

The same plate-shaped specimens were measured at room temperature according to GMW14688 method.

### (8) Tactility

The softness of the specimen in the form of a grained plate was evaluated by at least 10 panel members while it was pressed against the z-axis and rubbed in the xy-axis.

**[Table 2]**

| Property | Unit | Example | Comparative Example | | | | |
|---|---|---|---|---|---|---|---|
| | | 1 | 1 | 2 | 3 | 4 | 5 |
| Density | g/cm³ | 1.112 | 1.120 | 1.035 | 1.122 | 1.118 | 1.114 |
| Tensile strength | MPa | 37 | 33 | 28 | 56 | 85 | 37 |
| Elongation | % | 11 | 17 | 8 | 5 | 7 | 11 |
| Flexural strength | MPa | 47 | 26 | 24 | 45 | 130 | 43 |
| Flexural modulus | MPa | 2,720 | 1,040 | 1,200 | 3,800 | 5,800 | 2,700 |
| Charpy impact strength (23°C) | KJ/m² | 39.2 | 51.2 | 43.1 | 52.5 | 19.3 | 35.7 |
| Charpy impact strength (-30°C) | KJ/m² | 17.4 | 15.3 | 27.6 | 33.1 | 11.8 | 15.2 |
| Shore D (15 s) | - | 55 | 45 | 46 | 58 | - | 56 |
| Heat deflection temperature | °C | 157 | 79 | 124 | 147 | 160 | 154 |
| Scratch resistance | ΔL | -0.120 | -0.307 | -0.353 | -0.422 | -0.406 | -0.217 |
| Tactility | | Excellent | Excellent | Excellent | Poor | Poor | Excellent |
| Appearance | | Excellent | Normal | Excellent | Normal | Normal | Poor |

As can be seen from the above Tables 1 and 2, the composite resin composition of the Example, falling within the scope of the present invention, was excellent in tactility, heat resistance, rigidity, and scratch resistance of the molded articles.

In contrast, in Comparative Example 1 in which a short glass fiber was used instead of a long glass fiber and in Comparative Example 2 in which the content of the long glass fiber was outside the scope of the present invention, the rigidity of the molded articles was insufficient.

Meanwhile, in Comparative Example 3 in which a polyamide resin was not used, the molded article had a low heat deflection temperature and unsatisfactory tactility due to its high hardness. In Comparative Example 4 in which an ethylene-α-olefin rubber copolymer resin was not used, the molded article had a low impact strength and unsatisfactory tactility although it had an excellent rigidity. In Comparative Example 5 in which a nucleating agent was not used, the appearance of the molded article was not good.

In sum, the composite resin composition, falling within the scope of the present invention, was excellent in tactility and heat resistance as well as excellent in rigidity and scratch resistance of the molded articles. Thus, a molded article prepared therefrom can be advantageously used as automobile interior and exterior parts, electronic and household appliances parts, construction and industrial supplies, and the like.

## Claims

1. A composite resin composition, which comprises, based on 100 parts by weight of components (a) to (f), (a) 10 to 40 parts by weight of a propylene homopolymer resin; (b) 25 to 60 parts by weight of a long glass fiber, which has an average diameter of 10 to 30 µm and an average length of 5 to 20 mm; (c) 0.2 to 15 parts by weight of a modified polyolefin resin, (d) 1 to 15 parts by weight of a polypropylene-based resin selected from the group consisting of an ethylene-propylene block copolymer resin and an ethylene-propylene random copolymer resin; (e) 30 to 50 parts by weight of an ethylene-α-olefin rubber copolymer resin, wherein the copolymer is a copolymer of ethylene and an having 4 to 8 carbon atoms; (f) 0.1 to 10 parts by weight of a polyamide resin; and (g) 500 to 3,000 ppm of a nucleating agent, wherein the propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg, and the mixing ratio of the first propylene homopolymer resin and the second propylene homopolymer resin is 3:7 to 7:3 by weight.

2. The composite resin composition of claim 1, wherein the modified polyolefin resin (c) is a polypropylene resin grafted with maleic anhydride.

3. The composite resin composition of claim 1 or 2, wherein the ethylene-α-olefin rubber copolymer resin (e) has a melt index of 0.5 to 40 g/10 minutes as measured at 190°C under a load of 2.16 kg.

4. The composite resin composition of claim 3, wherein the ethylene-α-olefin rubber copolymer resin (e) is at least one selected from the group consisting of an ethylene-1-butene rubber, an ethylene-butylene rubber, an ethylene-1-pentene rubber, an ethylene-1-hexene rubber, ethylene-1-heptene rubber, and ethylene-l-octene rubber.

5. The composite resin composition of one or more of claims 1 to 4, wherein the polyamide resin (f) is at least one of an aliphatic polyamide resin selected from the group consisting of nylon 6, nylon 46, nylon 66, nylon 610, nylon 11, nylon 12, and nylon 6/66; and an aromatic polyamide resin selected from the group consisting of a copolymerized polyamide of palladium aminomethylbenzoic acid and ε-caprolactam (or nylon AHBA/6) and a copolymerized polyamide of terephthalic acid and trimethylhexamethylenediamine (or nylon THDT).

6. The composite resin composition of one or more of claims 1 to 5, wherein the nucleating agent (g) is at least one of a sorbitol-based nucleating agent selected from the group consisting of benzylidene sorbitol, methylbenzylidene sorbitol, ethylbenzylidene sorbitol, and 3,4-dimethylbenzylidene sorbitol; an aluminum-based nucleating agent of aluminum hydroxy-di-t-butylbenzoate; and a sodium-based nucleating agent of sodium 2,2'-methylenebis(4,6-di-t-butylphenyl)phosphate.

7. The composite resin composition of one or more of claims 1 to 6, which further comprises at least one additive (h) selected from the group consisting of an antioxidant, a neutralizer, a reinforcement, a filler, a weathering stabilizer, an antistatic agent, a lubricant, a slip agent, a pigment, and a dye.

8. The composite resin composition of one or more of claims 1 to 7, wherein the additive (h) is at least one antioxidant selected from the group consisting of tetrakis(methylene(3,5-di-t-butyl-4-hydroxy)hydrosilylnate),1,3,5-trimethyl-tris(3,5-di-t-butyl-4-hydroxybenzene), and tris(2,4-di-t-butylphenyl)phosphite.

9. A process for preparing a composite resin composition, which comprises (A) preparing a first masterbatch by mixing, based on 100 parts by weight of components (a) to (f), (a) 10 to 40 parts by weight of a propylene homopolymer resin, (b) 25 to 60 parts by weight of a long glass fiber, which has an average diameter of 10 to 30 µm and an average length of 5 to 20 mm, and (c) 0.1 to 10 parts by weight of a modified polyolefin resin; (B) preparing a second masterbatch by mixing, based on 100 parts by weight of components (a) to (f), (d) 1 to 15 parts by weight of a polypropylene-based resin selected from the group consisting of an ethylene-propylene block copolymer resin and an ethylene-propylene random copolymer resin, (e) 30 to 50 parts by weight of an ethylene-α-olefin rubber copolymer resin, wherein the copolymer is a copolymer of ethylene and an having 4 to 8 carbon atoms, (f) 0.1 to 10 parts by weight of a polyamide resin, (c) 0.1 to 5 parts by weight of a modified polyolefin resin, and (g) 500 to 3,000 ppm of a nucleating agent, and (C) mixing the first masterbatch and the second masterbatch, wherein the propylene homopolymer resin (a) is a mixture of a first propylene homopolymer resin having a melt index of 20 to 40 g/10 minutes and a second propylene homopolymer resin having a melt index of 500 to 1,500 g/10 minutes as measured at 230°C under a load of 2.16 kg, and the mixing ratio of the first propylene homopolymer resin and the second propylene homopolymer resin is 3:7 to 7:3 by weight.

10. A molded article of a composite resin prepared by molding the composite resin composition of any one of claims 1 to 8 or a composite resin composition prepared by the preparation process of claim 9.

11. The molded article of a composite resin of claim 10, which is selected from the group consisting of automobile interior and exterior parts, electronic and household appliances parts, and construction and industrial supplies.

## Patentansprüche

1. Verbundharzzusammensetzung, umfassend, bezogen auf 100 Gewichtsteile der Komponenten (a) bis (f), (a) 10 bis 40 Gewichtsteile eines Propylen-Homopolymer-Harzes; (b) 25 bis 60 Gewichtsteile einer langen Glasfaser, die einen mittleren Durchmesser von 10 bis 30 µm und eine mittlere Länge von 5 bis 20 mm aufweist; (c) 0,2 bis 15 Gewichtsteile eines modifizierten Polyolefinharzes; (d) 1 bis 15 Gewichtsteile eines Harzes auf Polypropylenbasis, das aus der Gruppe ausgewählt ist, die aus einem Ethylen-Propylen-Blockcopolymerharz und einem statistischen Ethylen-Propylen-Copolymerharz besteht; (e) 30 bis 50 Gewichtsteile eines Ethylen-α-Olefin-Kautschuk-Copolymerharzes, wobei das Copolymer ein Copolymer von Ethylen und einem α-Olefin mit 4 bis 8 Kohlenstoffatomen ist; (f) 0,1 bis 10 Gewichtsteile eines Polyamidharzes; und (g) 500 bis 3000 ppm eines Keimbildners, wobei das Propylen-Homopolymer-Harz (a) ein Gemisch aus einem ersten Propylen-Homopolymer-Harz mit einem Schmelzindex von 20 bis 40 g/10 Minuten und einem zweiten Propylen-Homopolymer-Harz mit einem Schmelzindex von 500 bis 1500 g/10 Minuten ist, wenn bei 230 °C unter einer Last von 2,16 kg gemessen wird, und das Mischungsverhältnis des ersten Propylen-Homopolymer-Harzes zu dem zweiten Propylen-Homopolymer-Harz 3:7 bis 7:3 Gewichtsteile beträgt.

2. Verbundharzzusammensetzung gemäß Anspruch 1, wobei das modifizierte Polyolefinharz (c) ein mit Maleinsäureanhydrid gepfropftes Polypropylenharz ist.

3. Verbundharzzusammensetzung gemäß Anspruch 1 oder 2, wobei das Ethylen-α-Olefin-Kautschuk-Copolymerharz (e) einen Schmelzindex von 0,5 bis 40 g/10 Minuten aufweist, wenn bei 190 °C unter einer Last von 2,16 kg gemessen wird.

4. Verbundharzzusammensetzung gemäß Anspruch 3, wobei das Ethylen-α-Olefin-Kautschuk-Copolymerharz (e) wenigstens eines ist, das aus der Gruppe ausgewählt ist, die aus einem Ethylen-l-Buten-Kautschuk, einem Ethylen-Butylen-Kautschuk, einem Ethylen-l-Penten-Kautschuk, einem Ethylen-l-Hexen-Kautschuk, einem Ethylen-l-Hepten-Kautschuk und einem Ethylen-l-Octen-Kautschuk besteht.

5. Verbundharzzusammensetzung gemäß einem oder mehreren der Ansprüche 1 bis 4, wobei das Polyamidharz (f) wenigstens eines aus einem aliphatischen Polyamidharz, das aus der Gruppe ausgewählt ist, die aus Nylon 6, Nylon 46, Nylon 66, Nylon 610, Nylon 11, Nylon 12 und Nylon 6/66 besteht, und einem aromatischen Polyamidharz, das aus der Gruppe ausgewählt ist, die aus einem copolymerisierten Polyamid von Palladiumaminomethylbenzoesäure und ε-Caprolactam (oder Nylon AHBA/6) und einem copolymerisierten Polyamid von Terephthalsäure und Trimethylhexamethylendiamin (oder Nylon THDT) besteht, ist.

6. Verbundharzzusammensetzung gemäß einem oder mehreren der Ansprüche 1 bis 5, wobei der Keimbildner (g) wenigstens eines aus einem Keimbildner auf Sorbitbasis, der aus der Gruppe ausgewählt ist, die aus Benzylidensorbit, Methylbenzylidensorbit, Ethylbenzylidensorbit und 3,4-Dimethylbenzylidensorbit besteht, einem Keimbildner auf Aluminiumbasis, und zwar Aluminiumhydroxydi-t-butylbenzoat, und einem Keimbildner auf Natriumbasis, und zwar Natrium-2,2'-methylenbis(4,6-di-t-butylphenyl)-phosphat, ist.

7. Verbundharzzusammensetzung gemäß einem oder mehreren der Ansprüche 1 bis 6, die weiterhin wenigstens ein Additiv (h) umfasst, das aus der Gruppe ausgewählt ist, die aus einem Antioxidans, einem Neutralisator, einem Verstärkungsmittel, einem Füllstoff, einem Witterungsstabilisator, einem Antistatikmittel, einem Gleitmittel, einem Gleitadditiv, einem Pigment und einem Farbstoff besteht.

8. Verbundharzzusammensetzung gemäß einem oder mehreren der Ansprüche 1 bis 7, wobei das Additiv (h) wenigstens ein Antioxidans ist, das aus der Gruppe ausgewählt ist, die aus Tetrakis(methylen(3,5-di-t-butyl-4-hydroxy)hydrosilylat, 1,3,5-Trimethyltris(3,5-di-t-butyl-4-hydroxybenzol) und Tris(2,4-di-t-butylphenyl)phosphit besteht.

9. Verfahren zur Herstellung einer Verbundharzzusammensetzung, umfassend (A) Herstellen eines ersten Masterbatch durch Mischen, bezogen auf 100 Gewichtsteile der Komponenten (a) bis (f), von (a) 10 bis 40 Gewichtsteilen eines Propylen-Homopolymer-Harzes; (b) 25 bis 60 Gewichtsteilen einer langen Glasfaser, die einen mittleren Durchmesser von 10 bis 30 µm und eine mittlere Länge von 5 bis 20 mm aufweist; (c) 0,1 bis 10 Gewichtsteilen eines modifizierten Polyolefinharzes; (B) Herstellen eines zweiten Masterbatch durch Mischen, bezogen auf 100 Gewichtsteile der Komponenten (a) bis (f), von (d) 1 bis 15 Gewichtsteilen eines Harzes auf Polypropylenbasis, das aus der Gruppe ausgewählt ist, die aus einem Ethylen-Propylen-Blockcopolymerharz und einem statistischen Ethylen-Propylen-Copolymerharz besteht; (e) 30 bis 50 Gewichtsteilen eines Ethylen-α-Olefin-Kautschuk-Copolymerharzes, wobei das Copolymer ein Copolymer von Ethylen und einem α-Olefin mit 4 bis 8 Kohlenstoffatomen ist; (f) 0,1 bis 10 Gewichtsteilen eines Polyamidharzes; (c) 0,1 bis 5 Gewichtsteilen eines modifizierten Polyolefinharzes; und (g) 500 bis 3000 ppm eines Keimbildners; und (C) Mischen des ersten Masterbatch und des zweiten Masterbatch, wobei das Propylen-Homopolymer-Harz (a) ein Gemisch aus einem ersten Propylen-Homopolymer-Harz mit einem Schmelzindex von 20 bis 40 g/10 Minuten und einem zweiten Propylen-Homopolymer-Harz mit einem Schmelzindex von 500 bis 1500 g/10 Minuten ist, wenn bei 230 °C unter einer Last von 2,16 kg gemessen wird, und das Mischungsverhältnis des ersten Propylen-Homopolymer-Harzes zu dem zweiten Propylen-Homopolymer-Harz 3:7 bis 7:3 Gewichtsteile beträgt.

10. Formkörper aus einem Verbundharz, hergestellt durch Formen der Verbundharzzusammensetzung gemäß einem der Ansprüche 1 bis 8 oder einer Verbundharzzusammensetzung, die nach dem Herstellungsverfahren von Anspruch 9 hergestellt ist.

11. Formkörper aus einem Verbundharz gemäß Anspruch 10, der aus der Gruppe ausgewählt ist, die aus Autoinnen- und -außenteilen, Teilen von Elektronik- und Haushaltsgeräten sowie Bau- und Industriezubehör besteht.

## Revendications

1. Composition de résine composite, comprenant, par rapport à 100 parties en poids des composants (a) à (f), (a) 10 à 40 parties en poids d'une résine homopolymère de propylène, (b) 25 à 60 parties en poids d'une fibre de verre longue qui a un diamètre moyen de 10 à 30 µm et une longueur moyenne de 5 à 20 mm, (c) 0,2 à 15 parties en poids d'une résine polyoléfine modifiée, (d) 1 à 15 parties en poids d'une résine à base de polypropylène choisie dans le groupe consistant en une résine copolymère en bloc d'éthylène-propylène et une résine copolymère statistique d'éthylène-propylène, (e) 30 à 50 parties en poids d'une résine copolymère de caoutchouc d'éthylène-α-oléfine, dans laquelle ledit copolymère est un copolymère d'éthylène et d'une α-oléfine ayant de 4 à 8 atomes de carbone, (f) 0,1 à 10 parties en poids d'une résine polyamide, et (g) 500 à 3000 ppm d'un agent de nucléation, dans laquelle ladite résine homopolymère de propylène (a) est un mélange d'une première résine homopolymère de propylène ayant un indice de fusion de 20 à 40 g/10 minutes et une seconde résine homopolymère de propylène ayant un indice de fusion de 500 à 1500 g/10 minutes, tel que mesuré à 230 °C sous une charge de 2,16 kg, et le rapport de mélange de la première résine homopolymère de propylène à la seconde résine homopolymère de propylène est de 3 : 7 à 7 : 3 en poids.

2. Composition de résine composite selon la revendication 1, dans laquelle ladite résine polyoléfine modifiée (c) est une résine polypropylène greffée avec de l'anhydride maléique.

3. Composition de résine composite selon la revendication 1 ou 2, dans laquelle ladite résine copolymère de caoutchouc d'éthylène-α-oléfine (e) présente un indice de fusion de 0,5 à 40 g/10 minutes tel que mesuré à 190 °C sous une charge de 2,16 kg.

4. Composition de résine composite selon la revendication 3, dans laquelle ladite résine copolymère de caoutchouc d'éthylène-α-oléfine (e) est au moins une choisie dans le groupe consistant en caoutchouc d'éthylène-l-butène, caoutchouc d'éthylène-butylène, caoutchouc d'éthylène-l-pentène, caoutchouc d'éthylène-1-hexène, caoutchouc d'éthylène-l-heptène, et caoutchouc d'éthylène-l-octène.

5. Composition de résine composite selon l'une ou plusieurs des revendications 1 à 4, dans laquelle ladite résine polyamide (f) est au moins une parmi une résine polyamide aliphatique choisie dans le groupe consistant en nylon 6, nylon 46, nylon 66, nylon 610, nylon 11, nylon 12, et nylon 6/66, et une résine polyamide aromatique choisie dans le groupe consistant en un polyamide copolymérisé de l'acide aminométhylbenzoïque-palladium et ε-caprolactame (ou nylon AHBA/6), et un polyamide copolymérisé de l'acide téréphtalique et triméthylhexaméthylènediamine (ou nylon THDT).

6. Composition de résine composite selon l'une ou plusieurs des revendications 1 à 5, dans laquelle ledit agent de nucléation est au moins un parmi un agent de nucléation à base de sorbitol choisi dans le groupe consistant en benzylidènesorbitol, méthylbenzylidènesorbitol, éthylbenzylidènesorbitol, et 3,4-diméthylbenzylidènesorbitol, un agent de nucléation à base d'aluminium, à savoir le benzoate-hydroxydi-t-butyle d'aluminium, et un agent de nucléation à base de sodium, à savoir le phosphate de 2,2'-méthylènebis(4,6-di-t-butylphényle).

7. Composition de résine composite selon l'une ou plusieurs des revendications 1 à 6, comprenant en outre au moins un additif (h) choisi dans le groupe consistant en un antioxydant, un neutralisant, un renforcement, un agent de charge, un stabilisant aux intempéries, un agent antistatique, un lubrifiant, un additif de glissement, un pigment, et un colorant.

8. Composition de résine composite selon l'une ou plusieurs des revendications 1 à 7, dans laquelle ledit additif (h) est au moins un antioxydant choisi dans le groupe consistant en tétrakis(méthylène(3,5-di-t-butyl-4-hydroxy)hydrosilylate), 1,3,5-triméthyl-tris(3,5-di-t-butyl-4-hydroxyben-zène), et phosphite de tris(2,4-di-t-butylphényle).

9. Procédé pour préparer une composition de résine composite, comprenant les étapes consistant à (A) préparer un premier mélange maître en mélangeant, par rapport à 100 parties en poids des composants (a) à (f), (a) 10 à 40 parties en poids d'une résine homopolymère de propylène, (b) 25 à 60 parties en poids d'une fibre de verre longue qui a un diamètre moyen de 10 à 30 µm et une longueur moyenne de 5 à 20 mm, (c) 0,1 à 10 parties en poids d'une résine polyoléfine modifiée, (B) préparer un second mélange maître en mélangeant, par rapport à 100 parties en poids des composants (a) à (f), (d) 1 à 15 parties en poids d'une résine à base de polypropylène choisie dans le groupe consistant en une résine copolymère en bloc d'éthylène-propylène et une résine copolymère statistique d'éthylène-propylène, (e) 30 à 50 parties en poids d'une résine copolymère de caoutchouc d'éthylène-α-oléfine, dans laquelle ledit copolymère est un copolymère d'éthylène et d'une α-oléfine ayant de 4 à 8 atomes de carbone, (f) 0,1 à 10 parties en poids d'une résine polyamide, (c) 0,1 à 5 parties en poids d'une résine polyoléfine modifiée, et (g) 500 à 3000 ppm d'un agent de nucléation, et (C) mélanger le premier mélange maître et le second mélange maître, dans lequel ladite résine homopolymère de propylène (a) est un mélange d'une première résine homopolymère de propylène ayant un indice de fusion de 20 à 40 g/10 minutes et une seconde résine homopolymère de propylène ayant un indice de fusion de 500 à 1500 g/10 minutes, tel que mesuré à 230 °C sous une charge de 2,16 kg, et le rapport de mélange de la première résine homopolymère de propylène à la seconde résine homopolymère de propylène est de 3 : 7 à 7 : 3 en poids.

10. Pièce moulée d'une résine composite préparée en moulant la composition de résine composite selon l'une quelconque des revendications 1 à 8, ou une composition de résine composite préparée par le procédé de préparation selon la revendication 9.

11. Pièce moulée d'une résine composite selon la revendication 10, qui est choisie dans le groupe consistant en pièces intérieures et extérieures d'automobile, pièces d'appareils électroniques et ménagers, et accessoires de construction et industriels.
